# EUROPÄISCHE PATENTANMELDUNG

(11) **EP 1 080 814 A2**
(43) Veröffentlichungstag der Anmeldung: **07.03.2001**
(21) Anmeldenummer: 00117701.3
(22) Anmeldetag: 17.08.2000
(51) Int. Cl.: B23D 37/10

(54) **Senkrecht-Innen-Druck-Räummaschine**

(30) Priorität: 04.09.1999 DE 19942163
(71) Anmelder: Oswald Forst Maschinenfabrik und Apparatebauanstalt GmbH & Co Kommanditgesellschaft, 42659 Solingen (DE)
(72) Erfinder: Berktold, Andreas, Dr., 41460 Neuss (DE); Grigutsch, Thomas, 42657 Solingen (DE)
(74) Vertreter: Rau, Manfred, Dr. Dipl.-Ing.

(57) **Zusammenfassung**

Eine Senkrecht-Innen-Druck-Räummaschine weist einen Maschinenständer (3) und einen auf Schlittenführungs-Schienen (9a, 9b) verschiebbar geführten Werkstück-Hebetisch (10) auf. Unterhalb des Hebetisches (10) ist ein Zubringerschlitten (11) auf Führungsschienen (12a, 12b) vertikal verschiebbar angeordnet. Diese Führungsschienen (12a, 12b) können gesondert von den Schlittenführungs-Schienen (9a, 9b) sein. Der Hebetisch (10) wird mittels nur eines Hub-Antriebes angetrieben, der hinter der durch die Schlittenführungs-Schienen (9a, 9b) aufgespannten Ebene angeordnet ist.

## Beschreibung

Die Erfindung betrifft eine Senkrecht-Innen-Druck-Räummaschine nach dem Oberbegriff des Anspruches 1.

Eine derartige aus der DE 196 24 404 A (entspr. US-Patent 5,833,411) bekannte Räummaschine weist zwei die Quertraverse und den Hebetisch verbindende, mit ihren Mittel-Längs-Achsen in einer gemeinsamen Ebene angeordnete Hub-Spindeln auf, wobei in dieser Ebene ebenfalls die Achse des mindestens einen Räumwerkzeuges angeordnet ist und zwar zwischen den beiden Hub-Spindeln. Durch diese Ausgestaltung ist der Maschinenständer selber kräftefrei, da die gesamten Räumkräfte in dem System aus Hebetisch, Quertraverse, Hub-Spindeln und Räumwerkzeug bleiben.

Der Erfindung liegt die Aufgabe zugrunde, die Räummaschine der gattungsgemäßen Art so auszugestalten, daß sie konstruktiv einfacher aufgebaut ist.

Diese Aufgabe wird erfindungsgemäß durch die Merkmale im Kennzeichnungsteil des Anspruches 1 gelöst. Durch die erfindungsgemäße Maßnahme wird erreicht, daß Probleme, die im Vorhandensein von zwei Hub-Antrieben liegen können, vermieden werden. Hierbei handelt es sich um die Synchronisation von zwei Antriebsmotoren für zwei Hub-Spindeln und unterschiedliche Erwärmungen und damit unterschiedliche Wärmeausdehnungen der Hub-Spindeln, oder um die Synchronisation von zwei hydraulisch beaufschlagbaren Kolben-Zylinder-Antrieben. Weiterhin werden Führungsprobleme des Hebetisches durch eine Überbestimmung der Führung vermieden, die bei einer spielfreien Führung des Hebetisches und bei einem Antrieb durch zwei Hub-Antriebe auftreten können. Weiterhin wird eine schmalere Bauweise im Vergleich zu der bekannten Ausführung erreicht. Durch die Vermeidung der geschilderten Nachteile wird auch eine Kostenreduktion erreicht.

Die Ansprüche 2 und 3 geben die denkbaren Anordnungen des Hub-Antriebes wieder.

Die Ansprüche 4 bis 11 geben vorteilhafte Ausgestaltungen des Hebetisch-Antriebes und seine Ankoppelung an den Hebetisch wieder.

Die Ansprüche 12 bis 15 geben vorteilhafte Ausgestaltungen eines zusätzlichen Drall-Antriebs wieder, wobei insbesondere die Ausgestaltung nach Anspruch 15 eigenständig erfinderisch ist.

Durch die erfinderische Weiterbildung nach Anspruch 16 wird die Beladehöhe noch weiter reduziert, da die Führungen des Zubringerschlittens und des Hebetisches in zusammengefahrenem Zustand einander teilweise überdecken können.

Weitere Merkmale, Vorteile und Einzelheiten der Erfindung ergeben sich aus der nachfolgenden Beschreibung von Ausführungsbeispielen anhand der Zeichnung. Es zeigen
- Fig. 1: eine Frontansicht einer Senkrecht-Innen-Druck-Räummaschine ohne räumliche Zuordnung eines Räumwerkzeuges,
- Fig. 2: die Räummaschine nach Fig. 1 in einer Seitenansicht in teilweise aufgebrochener Darstellung,
- Fig. 3: einen Horizontalschnitt durch die Räummaschine nach den Fig. 1 und 2 gemäß der Schnittlinie III-III in den Fig. 1 und 2,
- Fig. 4: eine Seitenansicht der Räummaschine vor Beginn eines Räumhubes während der Beladung mit einem zu räumenden Werkstück,
- Fig. 5: eine Seitenansicht der Räummaschine zu Beginn des Räumhubes,
- Fig. 6: eine Seitenansicht der Räummaschine am Ende des Räumhubes,
- Fig. 7: eine Seitenansicht der Räummaschine nach Beendigung des Räumhubes während der Entnahme des geräumten Werkstückes,
- Fig. 8: eine Frontansicht der Räummaschine mit einem gegenüber Fig. 1 geänderten Drall-Antrieb,
- Fig. 9: eine Seitenansicht der Räummaschine mit einem gegenüber Fig. 1 und Fig. 8 geänderten Drall-Antrieb,
- Fig. 10: eine Frontansicht der Räummaschine mit einem gegenüber den Fig. 1 bis 9 abgewandelten Hub-Antrieb, und
- Fig. 11: die Räummaschine nach Fig. 10 in einer Seitenansicht in teilweise aufgebrochener Darstellung.

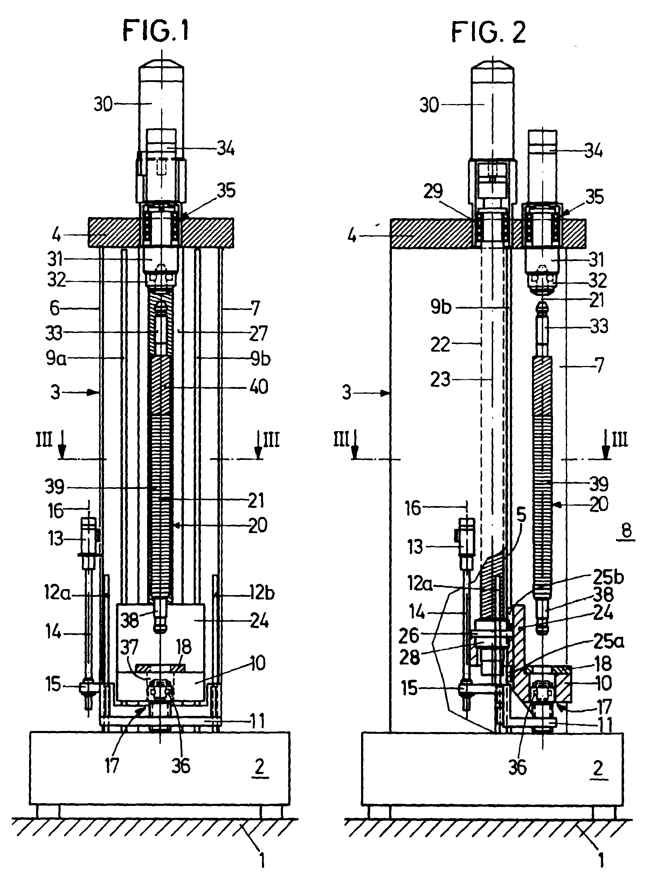

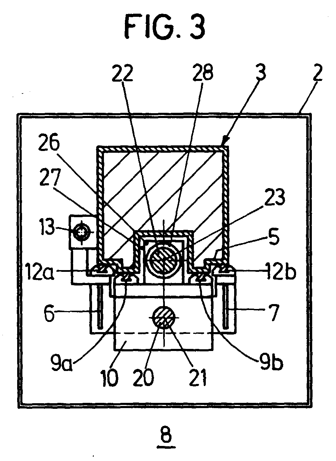

Wie aus den Fig. 1 und 2 hervorgeht, weist eine erfindungsgemäße Senkrecht-Innen-Druck-Räummaschine einen auf einem Fundament 1 abgestützten Maschinenfuß 2 auf, der Teil eines Maschinenständers 3 ist. Der Maschinenständer 3 ist nach oben durch eine Quertraverse 4 abgeschlossen und weist zwischen Maschinenfuß 2 und Quertraverse 4 eine Rückwand 5 und Seitenwände 6, 7 auf, die entsprechend der Querschnittsdarstellung in Fig. 3 C-förmig ausgestaltet sind und die zusammen mit dem Maschinenfuß 2 und der Quertraverse 4 den Maschinenständer 3 insgesamt sehr stabil machen.

An der der Beladeseite 8 der Räummaschine zugewandten Vorderseite der Rückwand 5 sind Schlittenführungs-Schienen 9a, 9b angebracht, auf denen ein als Räumschlitten dienender Werkstück-Hebetisch 10 vertikal verschiebbar geführt ist.

Unterhalb des Hebetisches 10 ist ein Zubringerschlitten 11 auf von den Schlittenführungs-Schienen 9a, 9b gesonderten Führungsschienen 12a, 12b vertikal mittels eines Zubringerschlitten-Antriebs verschiebbar angeordnet, der seitlich und unten am Maschinenständer 3 angebracht ist, so daß er nicht mit dem Hub-Antrieb kollidieren kann, unabhängig ob letzerer oberhalb oder unterhalb des Hebetisches 10 angeordnet ist. Der Zubringerschlitten 11 kann auch - wie aus der DE 196 24 404 A bekannt ist - auf den Schienen 9a, 9b verschiebbar angeordnet sein. Der Antrieb weist einen Zubringerschlitten-Antriebsmotor 13 auf, der eine vertikal angeordnete Zubringer-Spindel 14 antreibt. Auf dieser Spindel 14 ist eine fest mit dem Zubringerschlitten 11 verbundene Spindelmutter 15 angeordnet, so daß bei einer Drehung der Spindel 14 um ihre Achse 16 der Zubringerschlitten 11 in der Vertikalen verfahren wird. An dem Zubringerschlitten 11 ist ein unterer Räumwerkzeughalter 17 angebracht.

Der Hebetisch 10 weist eine Werkstück-Vorlage 18 zur Aufnahme eines zu räumenden Werkstückes 19 mittels eines Innen-Räumwerkzeuges 20 auf. Von der Beladeseite 8 her gesehen hinter den Schlittenführungen 9, also hinter der Rückwand 5, ist als einziger Hebetisch-Hub-Antrieb eine Hub-Spindel 22 angeordnet, die als Wälz-Schraub-Trieb ausgebildet ist. Die Mittel-Längs-Achse 23 der Spindel 22 liegt mit der Achse 21 des Räumwerkzeuges 20 in einer gemeinsamen vertikalen Ebene, die senkrecht zu der durch die Schlittenführungs-Schienen 9a, 9b aufgespannten vertikalen Ebene verläuft und diese mittig schneidet.

Der Hebetisch 10 weist eine schlittenartige Hinterwand 24 auf, an der vertikal übereinander auf den Schlittenführungs-Schienen 9a, 9b verschiebbar geführte Führungslager 25a, 25b angebracht sind. An der Hinterwand 24 ist ein von der Beladeseite 8 weg nach hinten ragender Arm 26 angebracht, der in eine kastenförmige Ausnehmung 27 in der Rückwand 5 hineinragt, in der die Hub-Spindel 22 angeordnet ist. Am Arm 26 ist eine Spindelmutter 28 angebracht, in der die Hub-Spindel 22 aufgenommen ist. Die Hub-Spindel 22 ist in einem Lager 29 in der Quertraverse 4 frei drehbar aber axial unverschiebbar gelagert. Sie wird mittels eines elektromotorischen Spindelantriebs 30 als Hub-Antrieb angetrieben, der ebenfalls auf der Quertraverse 4 angebracht ist.

Koaxial zur Achse 21 des Räumwerkzeuges 20 ist an der Quertraverse 4 ein oberer Räumwerkzeughalter 31 mit einem Endstückhalter 32 für das Endstück 33 des Räumwerkzeuges 20 angebracht. In diesem Ausführungsbeispiel ist der obere Räumwerkzeughalter 31 drehbar ausgebildet, um mittels des als Drall-Räumwerkzeug ausgebildeten Räumwerkzeuges 20 einen Drall-Räum-Vorgang ausführen zu können. Hierzu ist im vorliegenden Ausführungsbeispiel der obere Räumwerkzeughalter 31 mittels eines im wesentlichen durch einen Getriebemotor 34 gebildeten Drall-Antriebs 35 antreibbar. Der untere Räumwerkzeughalter 17 ist um die Achse 21 frei drehbar. Der untere Räumwerkzeughalter 17 weist einen Schafthalter 36 auf, der in eine unterhalb der Vorlage 18 am Hebetisch 10 ausgebildete Ausnehmung 37 einfahrbar ist und der zur Aufnahme und Halterung des unteren Schaftes 38 des Räumwerkzeuges 20 dient.

Alle Antriebsmotoren 13, 30, 34 werden mittels einer nicht dargestellten CNC-Steuerung gesteuert.

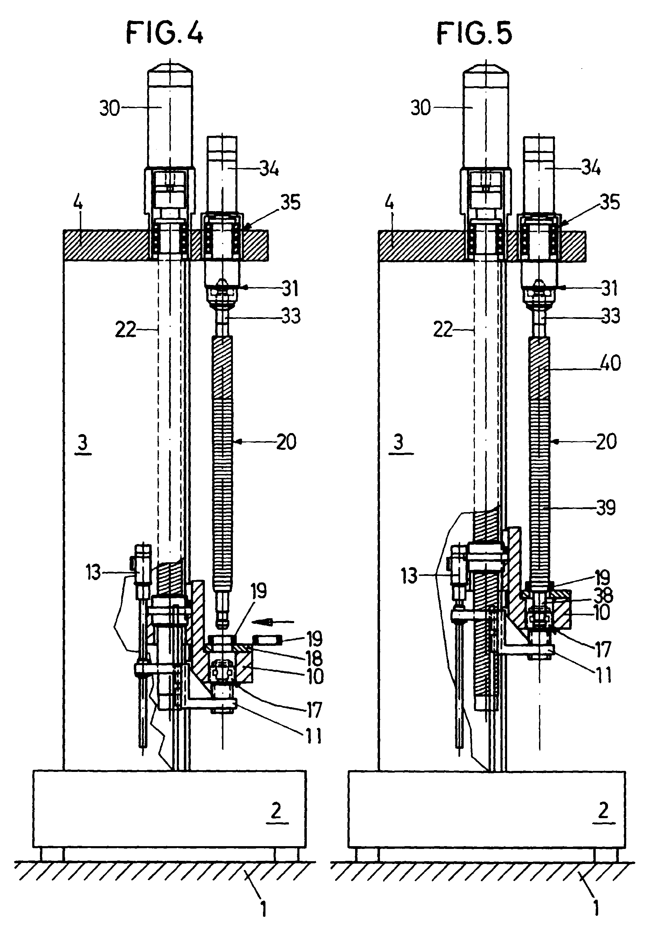

Die Arbeitsweise der zuvor beschriebenen Räummaschine wird nachfolgend anhand der Fig. 4 bis 7 erläutert.

In der Darstellung gemäß Fig. 4 befindet sich der Hebetisch 10 in seiner unteren Position. Der Zubringerschlitten 11 befindet sich in einer mittleren Position, in der sich der Schafthalter 36 in der Ausnehmung 37 unter der Vorlage 18 befindet. Das Räumwerkzeug 20 ist mit seinem Endstück 33 im oberen Räumwerkzeughalter 31 gehalten. Ein zu räumendes Werkstück 19 ist in die Vorlage 18 eingelegt. Diese untere Stellung des Hebetisches 10 entspricht also der Beladestellung.

Vor Beginn des Räumhubes werden entsprechend Fig. 5 der Hebetisch 10 und der Zubringerschlitten 11 gleichzeitig nach oben verfahren, bis der Schaft 38 des Räumwerkzeuges 20 im Schafthalter 36 des unteren Räumwerkzeughalters 17 aufgenommen und gehalten wird. Der Zubringerschlitten 11 verbleibt in dieser oberen Stellung, während nunmehr der eigentliche Räumhub durch entsprechenden Antrieb der Hub-Spindel 22 beginnt, wobei zuerst der im Schaft 38 benachbarte Räumabschnitt 39 und dann der dem Endstück 33 benachbarte Kalibrierabschnitt 40 des Räumwerkzeuges 20 durch das Werkstück 19 gedrückt werden, wobei gleichzeitig entsprechend dem zu erzeugenden Drall das Räumwerkzeug 20 um seine Achse 21 gedreht wird. Es wird also ein Druckräumen durchgeführt, bei dem die Hub-Spindel 22 auf Zug, das Räumwerkzeug 20 aber auf Druck beansprucht wird. Von den Schlittenführungs-Schienen 9a, 9b und entsprechend den Führungslagern 25a, 25b und dem Hebetisch 10 müssen die auftretenden Kippmomente aufgenommen werden, die um eine horizontale Achse in der Ebene der Schlittenführungs-Schienen 9a, 9b auftreten. Um eine horizontale Achse, die in der gemeinsamen Ebene der Achsen 21 und 23 liegt, treten aufgrund der geschilderten Symmetrieverhältnisse keine Kippmomente auf.

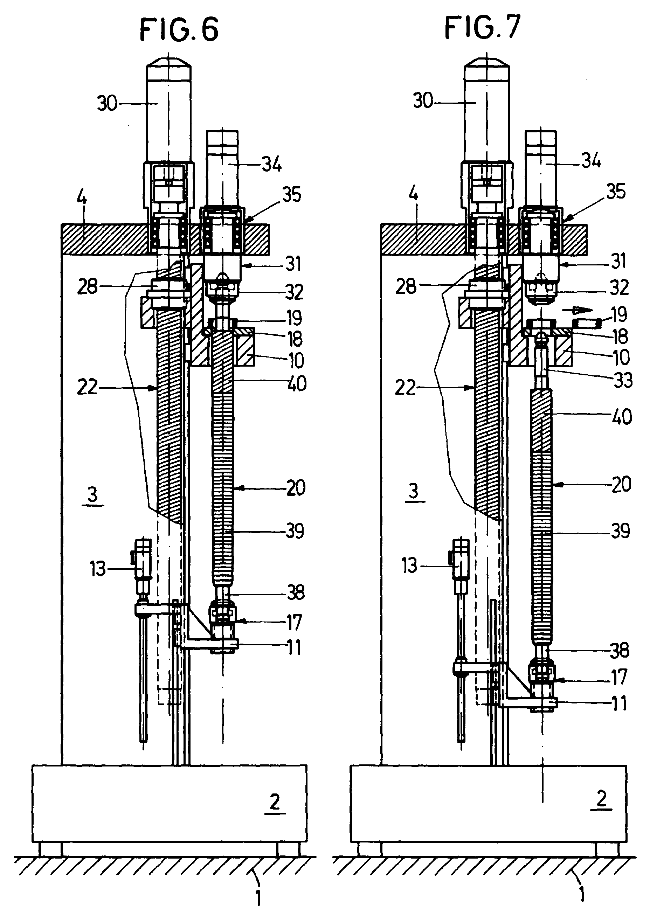

Am Ende des Räumhubes, wenn also auch der Kalibrierabschnitt 40 vollständig durch das Werkstück 19 gedrückt ist, hat der Hebetisch 10 seinen kleinstmöglichen Abstand von der Quertraverse 4, wie es in Fig. 6 dargestellt ist. Der Endstückhalter 32 wird nunmehr geöffnet und der Zubringerschlitten-Antriebsmotor 13 derart angesteuert, daß der Zubringerschlitten 11 samt dem von unteren Räumwerkzeughalter 17 gehaltenen Räumwerkzeug 20 nach unten verfahren wird und zwar in die in Fig. 7 dargestellte untere Position des Zubringerschlittens 11. In dieser Position ist auch das Endstück 33 des Räumwerkzeuges 20 nach unten aus dem Werkstück 19 herausgefahren, das jetzt aus der Vorlage 18 herausgenommen wird. Eine hier für allgemein bekannte Ausschubeinrichtung ist nicht dargestellt. Anschließend wird der Zubringerschlitten 11 wieder in seine obere Position verfahren, so daß der obere Räumwerkzeughalter 31 das Räumwerkzeug 20 wieder übernehmen kann. Dann wird der Hebetisch 10 wieder in seine untere Position verfahren, wobei auch der Zubringerschlitten 11 ebenfalls in seine mittlere Position verfahren wird, die in Fig. 4 dargestellt ist. Der Schaft 38 des Räumwerkzeuges 20 befindet sich jetzt so weit oberhalb der Vorlage 18, daß ein neues zu räumendes Werkstück 19 in diese eingelegt werden kann. Der Räumvorgang wiederholt sich anschließend.

Diese Räummaschine kann auch mehrere Räumstellen, also mehrere Räumwerkzeuge 20, aufweisen, die dann jeweils spiegelsymmetrisch zu einer vertikalen Ebene angeordnet sind, die senkrecht zu der durch die Schienen 9a, 9b gebildeten Ebene und mittig durch diese gelegt ist und die die Achse 23 der Hub-Spindel 22 aufnimmt. Auch in diesem Fall bleibt die Kippmomentenfreiheit um eine senkrecht auf der durch die Schienen 9a, 9b definierten Ebene erhalten.

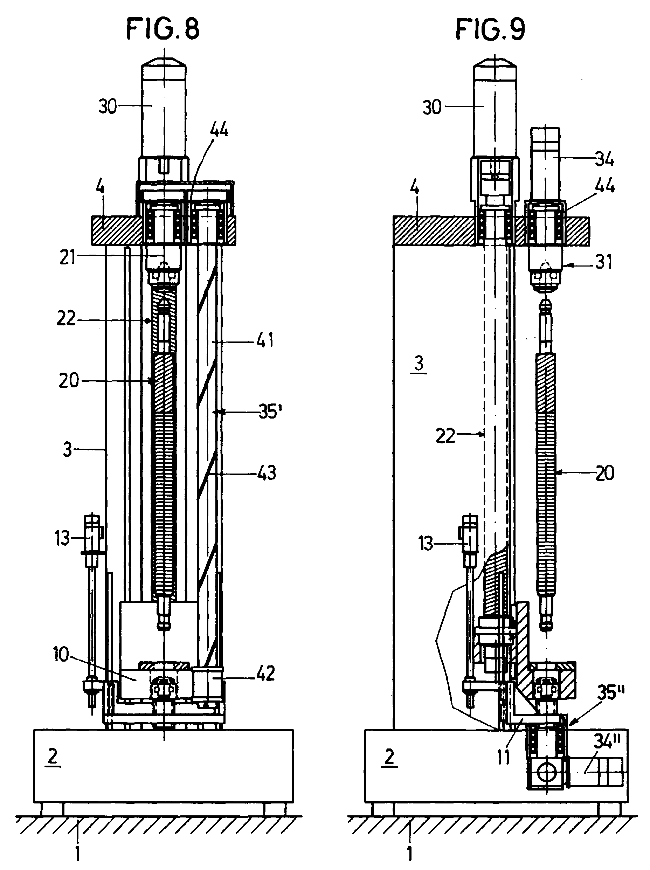

Die Ausführungsform nach Fig. 8 unterscheidet sich von der nach den Fig. 1 bis 7 nur dadurch, daß der Drall-Antrieb 35' eine sogenannte Drallstange 41 aufweist. Diese ist parallel zur Achse 21 des Räumwerkzeuges 20 drehbar in der Quertraverse 4 und im Hebetisch 10 angeordnet, wobei sie im Hebetisch 10 in einer Drall-Mutter 42 aufgenommen ist, die drehfest am Hebetisch 10 angebracht ist. Bei Verschiebungen des Hebetisches 10 wird die Drallstange 41 gedreht. Sie weist ein Gewinde 43 auf, das entsprechend der gewünschten Drall-Bewegung des Räumwerkzeuges 20 ausgelegt ist. Die Übertragung der Drehbewegung der Drallstange 41 auf den oberen Räumwerkzeughalter 31 erfolgt mittels eines Zahntriebes 44. Es ist auch möglich, die Drallstange 41 drehfest mit dem Hebetisch 10 zu verbinden und auf der Quertraverse 4 die Drall-Mutter 42 drehbar in der Weise zu lagern, daß sie ihre Drehbewegung direkt auf den Zahntrieb 44 überträgt. Ansonsten ist die Funktion dieser Räummaschine nach Fig. 8 identisch der unter Bezug auf die Fig. 1 bis 7 beschriebenen. Bei dieser Ausgestaltung treten am Hebetisch 10 Kippmomente um eine horizontale Achse auf, die senkrecht auf der durch die Schlittenführungs-Schienen 9a, 9b gebildeten Ebene verlaufen, und zwar weil die Drallstange 41 außerhalb der durch die Achsen 21 und 23 gebildeten Ebene angeordnet ist. Die Ausgestaltung mit nur einer Drallstange 41 läßt sich auch anwenden auf eine Ausführung der Räummaschine mit zwei oder gegebenenfalls vier Räumstellen, also zwei oder vier Räumwerkzeugen. In diesem Fall wird die Drallstange 41 in die vertikale Ebene gelegt, die senkrecht und mittig durch die durch die Schienen 9a, 9b gebildeten Ebene hindurchgeht und die die Achse 23 der Spindel 22 aufnimmt. Die Anordnung der Räumwerkzeuge ist ansonsten so, wie sie oben bereits geschildert wurde, nämlich spiegelsymmetrisch zu der die Achse 23 und die Drallstange 41 aufnehmenden Ebene. Auch in diesem Fall treten am Hebetisch 10 keine Kippmomente uni eine horizontale Achse auf, die senkrecht zu der durch die Schienen 9a, 9b aufgespannten Ebene verläuft.

Die Ausführungsform nach Fig. 9 unterscheidet sich von der nach den Fig. 1 bis 7 dadurch, daß auch der untere Räumwerkzeughalter 17 drehantreibbar ist. Hierzu ist an der Unterseite des Zubringerschlittens 11 ein ebenfalls von der CNC-Steuerung angesteuerter Getriebemotor 34'' als Drall-Antrieb 35'' angebracht. Bei dieser Ausführungsform können der Getriebemotor 34 und der Getriebemotor 34'' gleichzeitig synchron angetrieben werden, wodurch eine sehr ausgeprägte Reduktion des im Werkzeug 20 auftretenden Torsionsmoments erreicht wird. Es ist aber auch möglich, nur den unteren Drall-Antrieb 35'' einzusetzen und den oberen Räumwerkzeughalter 31 frei drehbar auszugestalten.

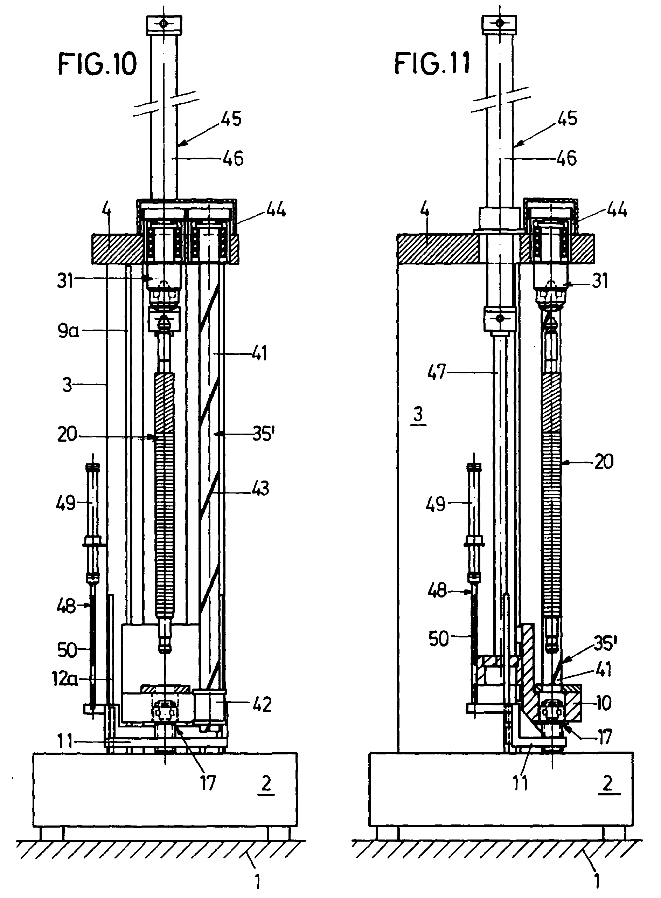

Die Ausführungsform nach den Fig. 10 und 11 unterscheidet sich von allen zuvor beschriebenen Ausführungsformen dadurch, daß als Hebetisch-Hub-Antrieb ein hydraulisch beaufschlagbarer Kolben-Zylinder-Antrieb 45 vorgesehen ist, dessen Zylinder 46 an der Quertraverse 4 angebracht ist. Seine Kolbenstange 47 ist mit dem Arm 26 des Hebetisches 10 verbunden. Die räumliche Anordnung ist die gleiche wie bei der Hub-Spindel 22. Bei dieser Ausführungsform ist weiterhin ein Zubringerschlitten-Antrieb vorgesehen, der ebenfalls als hydraulisch beaufschlagbarer Kolben-Zylinder-Antrieb 48 ausgebildet ist. Der Zylinder 49 ist am Maschinenständer 3 angebracht, während seine Kolbenstange 50 am Zubringerschlitten 11 befestigt ist.

Bei dieser Ausführungsform ist der gleiche Drall-Antrieb 35' vorgesehen, wie bei der Ausführungsform nach Fig. 8.

## Patentansprüche

1. Senkrecht-Innen-Druck-Räummaschine mit
- einem Maschinenständer (3),
- - mit einer oberen Quertraverse (4) und
- - einer Rückwand (5),
- an der Rückwand (5) angebrachten, in einer gemeinsamen vertikalen Ebene angeordneten Schlittenführungs-Schienen (9a, 9b),
- einem vor der Rückwand (5) auf den Schlittenführungs-Schienen (9a, 9b) verschiebbar geführten Werkstück-Hebetisch (10),
- einem unterhalb des Hebetisches (10) angeordneten, vertikal verschiebbar geführten Zubringerschlitten (11),
- einem den Maschinenständer (3) und den Hebetisch (10) verbindenden Hebetisch-Antrieb,
- mindestens einem an der Quertraverse (4) angebrachten oberen Räumwerkzeughalter (31),
- mindestens einer an dem Hebetisch (10) angeordneten Werkstück-Vorlage (18) zur Aufnahme eines zu räumenden Werkstückes (19) und
- mindestens einem am Zubringerschlitten (11) angebrachten unteren Räumwerkzeughalter (17),
wobei jeweils eine Werkstück-Vorlage (18) und ein oberer Räumwerkzeughalter (31) und ein unterer Räumwerkzeughalter (17) koaxial zur Mittel-Längs-Achse (21) eines Räumwerkzeuges (18) angeordnet sind,
**dadurch gekennzeichnet,**
**daß** der Hebetisch-Antrieb durch nur einen hinter der durch die Schlittenführungs-Schienen (9a, 9b) aufgespannten Ebene angeordneten Hub-Antrieb gebildet ist.

2. Senkrecht-Innen-Druck-Räummaschine nach Anspruch 1, **dadurch gekennzeichnet,**
**daß** der Hub-Antrieb die Quertraverse (4) und den Hebetisch (10) verbindet.

3. Senkrecht-Innen-Druck-Räummaschine nach Anspruch 1, **dadurch gekennzeichnet,**
**daß** der Hub-Antrieb unterhalb des Hebetisches (10) angeordnet ist.

4. Senkrecht-Innen-Druck-Räummaschine nach einem der Ansprüche 1 bis 3, **dadurch gekennzeichnet,**
**daß** der Hub-Antrieb in einer vertikalen Ebene angeordnet ist, die die durch die Schlittenführungs-Schienen (9a, 9b) aufgespannte vertikale Ebene senkrecht und mittig schneidet.

5. Senkrecht-Innen-Druck-Räummaschine nach einem der Ansprüche 1 bis 4, **dadurch gekennzeichnet,**
**daß** der Hebetisch (10) mit einem hinter die durch die Schlittenführungs-Schienen (9a, 9b) aufgespannte Ebene ragenden, mit dem Hub-Antrieb verbundenen Arm (26) versehen ist.

6. Senkrecht-Innen-Druck-Räummaschine nach einem der Ansprüche 1 bis 5, **dadurch gekennzeichnet,**
**daß** der Hub-Antrieb in einer sich vertikal erstreckenden Ausnehmung (27) der Rückwand (5) angeordnet ist.

7. Senkrecht-Innen-Druck-Räummaschine nach einem der Ansprüche 1 bis 6, **dadurch gekennzeichnet,**
**daß** der Hub-Antrieb als Hub-Spindel (22) ausgebildet ist, der nur ein Spindel-Antrieb (30) zugeordnet ist.

8. Senkrecht-Innen-Druck-Räummaschine nach Anspruch 7, **dadurch gekennzeichnet,**
**daß** die Hub-Spindel (22) drehbar in der Quertraverse (4) gelagert und in einer drehfest mit dem Hebetisch (10) verbundenen Spindelmutter (28) aufgenommen ist.

9. Senkrecht-Innen-Druck-Räummaschine nach Anspruch 5 und 8, **dadurch gekennzeichnet,**
**daß** der Arm (26) die Spindelmutter (28) trägt.

10. Senkrecht-Innen-Druck-Räummaschine nach einem der Ansprüche 7 bis 9, **dadurch gekennzeichnet,**
**daß** die Hub-Spindel (22) als Wälz-Schraub-Trieb ausgebildet ist.

11. Senkrecht-Innen-Druck-Räummaschine nach einem der Ansprüche 1 bis 6, **dadurch gekennzeichnet,**
**daß** der Hebetisch-Antrieb durch einen Kolben-Zylinder-Antrieb (48) gebildet ist.

12. Senkrecht-Innen-Druck-Räummaschine nach einem der Ansprüche 1 bis 11, **dadurch gekennzeichnet,**
**daß** mindestens ein Räumwerkzeughalter (31, 17) zur Erzeugung eines Drall-Räumvorganges mittels eines Drall-Antriebes (35, 35', 35'') drehantreibbar ist.

13. Senkrecht-Innen-Druck-Räummaschine nach Anspruch 12, **dadurch gekennzeichnet,**
**daß** der Drall-Antrieb (35') eine zum Räumwerkzeug (20) parallele, am Hebetisch (10) gehaltene und in einer Drall-Mutter (42) aufgenommene Drallstange (41) aufweist, wobei die Drallstange (41) oder die Drall-Mutter (42) mit dem oberen Räumwerkzeughalter (31) in Drehverbindung steht.

14. Senkrecht-Innen-Druck-Räummaschine nach Anspruch 12, **dadurch gekennzeichnet,**
**daß** der Drall-Antrieb (35) einen der Quertraverse (4) zugeordneten, mit dem oberen Räumwerkzeughalter (31) gekoppelten Getriebemotor (34) aufweist.

15. Senkrecht-Innen-Druck-Räummaschine nach Anspruch 12 oder 14, **dadurch gekennzeichnet,**
**daß** der Drall-Antrieb (35'') einen dem Zubringerschlitten (11) zugeordneten, mit dem unteren Räumwerkzeughalter (17) gekoppelten Getriebemotor (34'') aufweist.

16. Senkrecht-Innen-Druck-Räummaschine nach einem der Ansprüche 1 bis 15, **dadurch gekennzeichnet,**
**daß** der Zubringerschlitten (11) auf gegenüber den Schlittenführungs-Schienen (9a, 9b) gesonderten, gegenüber letzteren seitlich nach außen versetzten Führungsschienen (12a, 12b) verschiebbar geführt ist.

17. Senkrecht-Innen-Druck-Räummaschine nach einem der Ansprüche 1 bis 16, **dadurch gekennzeichnet,**
**daß** ein Zubringerschlitten-Antrieb seitlich am Maschinenständer (3) in dessen unterem Bereich angeordnet ist.
